# EUROPEAN PATENT SPECIFICATION

(11) **EP 1 511 615 B1**
(45) Date of publication and mention of the grant of the patent: **01.02.2006**
(21) Application number: 03735575.7
(22) Date of filing: 06.06.2003
(51) Int. Cl.: B29D 31/508, B29D 31/51, A43B 13/32

(54) **METHOD FOR MANUFACTURING A SHOE WITH A POLYURETHANE MID-SOLE COUPLED TO A POLYMERIC MATERIAL TREAD, AND SHOE OBTAINED WITH THE METHOD**
VERFAHREN ZUR HERSTELLUNG VON EINEM SCHUH MIT EINER PU ZWISCHENSOHLE UND DAMIT ANGEORDNETER KUNSTSTOFF LAUFSOHLE UND DURCH DIESES VERFAHREN HERGESTELLTER SCHUH
PROCEDE POUR FABRIQUER UNE CHAUSSURE AVEC UNE SEMELLE INTERCALAIRE EN POLYURETHANE COUPLEE A UNE SEMELLE EN MATIERE POLYMERE, ET CHAUSSURE OBTENUE AVEC CE PROCEDE

(30) Priority: 12.06.2002 IT PD20020158; 25.07.2002 IT PD20020204
(43) Date of publication of application: 09.03.2005
(73) Proprietor: Moscato, Claudio, 35027 Noventa Padovana (IT)
(72) Inventor: Moscato, Claudio, 35027 Noventa Padovana (IT)
(74) Representative: Modiano, Micaela Nadia
(86) International application number: PCT/EP2003/005997
(87) International publication number: WO 2003/106153

(56) References cited:
- EP-A- 0 745 476
- EP-A- 0 937 487
- US-A- 4 245 406
- US-A- 5 785 909

## Description

### Technical Field

The present invention relates to a method for manufacturing a shoe with a mid-sole made of polyurethane which is coupled to a tread made of polymeric material that overlaps the upper at least partially, in selected regions.

### Background Art

The invention also relates to the shoe obtained with the method.

As is known, many currently commercially available shoes with a tread made of rubber, a material that has excellent abrasion resistance characteristics, also have a mid-sole between the tread and the upper that is commonly made of polyurethane, EVA or other similar materials that are light and soft but have limited resistance to abrasion and are therefore not suitable for contact with the ground.

Polyurethane is increasingly used because of its characteristic of retaining elastic memory over time (a characteristic that is absent for example in EVA) and because of its biodegradability.

In one production method, shoes of this type are manufactured by injecting, directly into the mold, first the rubber tread and then the mid-sole for directly connecting the tread to the upper.

This kind of production method, although being quick and cheap (the product is obtained directly by the molding step), by providing the tread first, prevents the tread from overlapping the upper, for example to provide an abrasion-resistant tip.

In another production method, the tread and the mid-sole are provided in a mold individually and then, after trimming flash, washing, applying a primer and adhesives and drying them and carding the upper, the components are glued in an oven with reactivation of the adhesive.

In this case, it is possible to provide the tread so as to form regions in which it makes direct contact with the upper, for example for an abrasion-resistant tip, but the process is long and complicated and economically scarcely convenient.

### Disclosure of the Invention

The aim of the present invention is to provide a method for manufacturing a shoe with a polyurethane mid-sole coupled to a tread made of polymeric material that overlaps the upper at least partially, in selected regions, and combines production speed, simplicity and low cost.

An object of the present invention is to expand the operating possibilities of the manufacture of shoes with a polyurethane mid-sole and a tread made of polymeric material.

Another object of the present invention is to provide a shoe with a polyurethane mid-sole and a tread made of polymeric material that can be manufactured with conventional equipment and systems.

This aim and these and other objects that will become better apparent hereinafter are achieved by a method for manufacturing a shoe with a polyurethane mid-sole coupled to a tread made of polymeric material that overlaps the upper at least partially, in selected regions, which comprises the steps of:
-- injecting said polyurethane mid-sole inside a mold directly onto the upper;
-- separately molding the tread made of polymeric material;
-- gluing the tread to the mid-sole and to the upper in the regions that overlap said upper.

### Brief description of the Drawings

Further characteristics and advantages of the invention will become better apparent from the following detailed description of a preferred but not exclusive embodiment of the invention, illustrated by way of non-limitative example in the accompanying drawings, wherein:

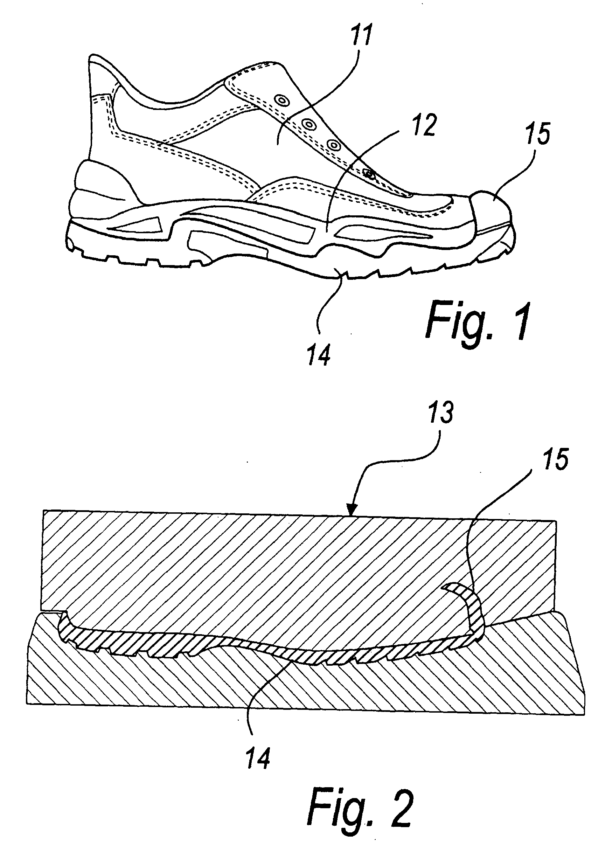

Figure 1 is a side view of a shoe manufactured with the method according to the invention;
Figure 2 is a longitudinal sectional view of a mold during the molding of the mid-sole;

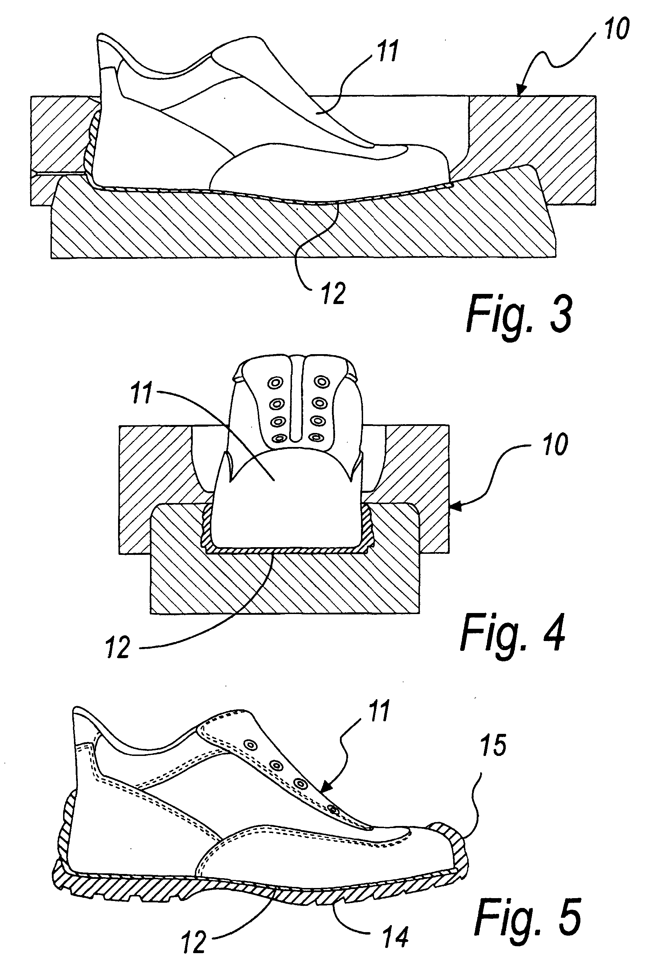

Figure 3 is a longitudinal sectional view of a mold during the molding of the mid-sole;
Figure 4 is a transverse sectional view of the mold of Figure 3 during the molding of the mid-sole;
Figure 5 is a longitudinal sectional view of the shoe of Figure 1.

### Ways of carrying out the Invention

With reference to the figures, a method for manufacturing a shoe with a polyurethane mid-sole coupled to a tread made of polymeric material that overlaps the upper at least partially, in selected regions 15, consists of a step in which a polyurethane mid-sole 12 is injected in a mold 10 directly onto the upper 11 (all kinds of this material, both ethers and esters, can be used).

In another step, which does not necessarily follow the preceding one but can occur simultaneously or precede it, the tread 14 made of polymeric material in one or more colors is manufactured separately in a mold 13.

The polymeric material that composes the tread 14 can be nylon, PVC (polyvinylchloride), TPU (thermoplastic polyurethane), PU (polyurethane), TR (thermoplastic rubber) and various others.

In the final step, the tread 14 is glued to the mid-sole 12 and to the upper 11 in the selected regions 15 that overlap it.

This gluing operation is preceded by steps for washing the mid-sole 12, applying a commonly used primer and adhesive and drying them, and by a carding of the upper 11 in the regions where the tread 14 is glued directly.

The gluing of the components is performed in an oven (not shown in the figures), with reactivation of the adhesive.

The shoe is therefore characterized in that its mid-sole 12 is injection-molded directly onto the upper 11 and the tread 14 (which can also be provided with a box-like configuration) is glued in regions 15 both to the mid-sole and to the upper.

In practice it has been found that the invention thus described solves the problems described above.

In particular, the described method allows to manufacture a shoe that has a polyurethane mid-sole coupled to a tread made of polymeric material that overlaps the upper at least in regions by means of a smaller number of production steps than the second case cited in the introduction, with lower production costs.

Another advantage obtained is the expansion of the functional possibilities of the manufacture of shoes having a polyurethane mid-sole and a tread made of polymeric material with the possibility to manufacture tips, heel elements and lateral parts made of polymeric material that extend directly from the tread.

The invention conceived is susceptible of numerous modifications and variations, all of which are within the scope of the appended claims; all the details may further be replaced with other technically equivalent elements.

In practice, the materials employed, so long as they are compatible with the specific use, as well as the dimensions, may be any according to requirements and to the state of the art.

## Claims

1. A method for manufacturing a shoe with a polyurethane mid-sole (12) coupled to a tread (14) made of polymeric material that overlaps the upper (11) at least partially, in selected regions (15), which comprises the steps of:
-- injecting said polyurethane mid-sole (12) inside a mold (13), directly onto the upper (11);
-- separately molding the tread (14) made of polymeric material;
-- gluing the tread (14) to the mid-sole (12) and to the upper (11) in the regions (15) that overlap said upper.

2. The method according to claim 1, **characterized in that** said gluing step is preceded by the steps for: washing the mid-sole (12); applying a primer and an adhesive and drying them; and carding the upper (11) in the regions where the tread (14) is glued directly.

3. The method according to claim 1, **characterized in that** said polymeric material that constitutes said tread (14) is selected from a group comprising Nylon, PVC, TPU, PU and TR.

4. A shoe obtained with a method according to one or more of the preceding claims, that comprises an injection-molded mid-sole (12) that is injection-molded directly onto an upper (11), and a tread (14) that is glued in selected regions (15) of the upper, both to the mid-sole (12) and to the upper (11).

## Patentansprüche

1. Verfahren zum Herstellen eines Schuhs mit einer Polyurethan-Zwischensohle (12), die mit einer aus einem Polymermaterial hergestellten Laufsohle (14) verbunden ist, die das Obermaterial (11) zumindest teilweise, in ausgewählten Bereichen (15) überlappt, wobei das Verfahren folgende Schritte aufweist:
- Spritzen der Polyurethan-Zwischensohle (12) innerhalb einer Gussform (13) direkt auf das Obermaterial (11);
- separates Gießen der aus Polymermaterial hergestellten Laufsohle (14);
- Kleben der Laufsohle (14) auf die Zwischensohle (12) und auf das O-bermaterial (11) in den Bereichen (15), die das Obermaterial überlappen.

2. Verfahren nach Anspruch 1, **dadurch gekennzeichnet, dass** dem Klebeschritt folgende Schritte vorgehen: Waschen der Zwischensohle (12); Aufbringen einer Grundierung und eines Klebers und Trocknen dieser; und Aufrauen des Obermaterials (11) in den Bereichen, in denen die Laufsohle (14) direkt geklebt wird.

3. Verfahren nach Anspruch 1, **dadurch gekennzeichnet, dass** das Polymermaterial, das die Laufsohle (14) bildet, aus der Gruppe ausgewählt wird, die Nylon, PVC, TPU, PU und TR enthält.

4. Schuh, der aus einem Verfahren gemäß einem oder mehreren der vorstehenden Ansprüche erhalten wird, der eine spritzgegossene Zwischensohle (12), die direkt auf ein Obermaterial (11) spritzgegossen ist, und eine Laufsohle (14) aufweist, die in ausgewählten Bereichen (15) des Obermaterials sowohl auf die Zwischensohle (12) und auf das Obermaterial (11) geklebt ist.

## Revendications

1. Procédé pour la fabrication d'une chaussure avec une semelle intermédiaire (12) en polyuréthane associée à une semelle (14) réalisée en matière polymère qui recouvre au moins partiellement l'empeigne (11) dans des zones choisies (15), qui comprend les étapes de :
- injecter ladite semelle intermédiaire (12) en polyuréthane à l'intérieur d'un moule (13), directement sur l'empeigne (11) ;
- mouler séparément la semelle (14) réalisée en matière polymère ;
- coller la semelle (14) à la semelle intermédiaire (12) et à l'empeigne (11) dans les zones (15) qui recouvrent ladite empeigne.

2. Procédé selon la revendication 1,
**caractérisé en ce que** l'étape de collage est précédée par les étapes pour : laver la semelle intermédiaire (12) ; appliquer une couche primaire et un adhésif et les sécher ; et carder l'empeigne (11) dans les zones où la semelle (14) est directement collée.

3. Procédé selon la revendication 1,
**caractérisé en ce que** ladite matière polymère qui constitue ladite-semelle (14) est choisie parmi un groupe comprenant le Nylon, PVC, TPU, PU et TR.

4. Chaussure obtenue par un procédé selon une ou plusieurs des revendications précédentes, qui comprend une semelle intermédiaire (12) moulée par injection, qui est moulée par injection directement sur une empeigne (11), et une semelle (14) qui est collée dans des zones choisies (15) de l'empeigne, à la fois à la semelle intermédiaire (12) et à l'empeigne (11).
